# EUROPEAN PATENT APPLICATION

(11) **EP 3 950 287 A1**
(43) Date of publication of application: **09.02.2022**
(21) Application number: 20783531.5
(22) Date of filing: 01.04.2020
(51) Int. Cl.: B29C 70/54, B29C 35/00, B29C 33/02

(54) **MODULAR COVER FOR A MOULDING TOOL**

(30) Priority: 02.04.2019 ES 201930299
(71) Applicant: Airbus Operations, S.L.U., 28906 Getafe (Madrid) (ES)
(72) Inventor: JARA RODELGO, Álvaro, 28906 Getafe - Madrid (ES); VÁZQUEZ CASTRO, Jesús Javier, 28906 Getafe - Madrid (ES); VÁZQUEZ SÁNCHEZ, Pablo, 28906 Getafe - Madrid (ES)
(74) Representative: ABG Intellectual Property Law, S.L.
(86) International application number: PCT/ES2020/070215
(87) International publication number: WO 2020/201602

(57) **Abstract**

A modular cover is provided to cover a molding tool, in which the cover comprises a plurality of plates designed to be coupled together to cover at least a portion of the surface of the molding tool, fastening means designed to fasten the plurality of plates to the molding tool, in which each of the plurality of plates has at least one coating of reflective material. A system and a method for manufacturing a structural element are also provided.

## Description

### PURPOSE OF THE INVENTION

The present invention relates to a cover used to cover tools used to shape preforms and/or cure composite materials subjected to a thermodynamic cycle, for example a mold used as part of an RTM system.

The present invention also relates to a system and method for minimizing thermal losses through the mold border in contact with the atmosphere and improving thermal control of the process.

### BACKGROUND TO THE INVENTION

In the composite material production sector, there are numerous manufacturing processes selected as a function of different parameters, such as the desired mechanical features, the nature of the reinforcing material and of the polymer material used, and the cost associated with said manufacturing process, inter alia. On account of the delicate nature of the materials used and the strict requirements imposed both in terms of tolerances and performance in service, a wide range of systems and tools are used, such as vacuum bags, autoclaves, presses and molds, inter alia.

To produce a composite material, the composite material is subjected to a thermodynamic cycle through the application of pressure and temperature to cure the polymer material. On account of this, as a general rule, the tools used have to be compatible with and suited to said thermodynamic cycle, and have to ensure optimum conditions of thermal and dimensional stability for said production process.

Selecting the manufacturing material to suit the tools used is a compromise solution that can be used in consideration of the related manufacturing cost, the coefficient of thermal expansion, the option of applying surface treatments with products to facilitate release of the composite material once the polymer material has been cured, performance and response to any mechanized process required, service life, and thermal conductivity, inter alia. In general, metal materials are good candidates for the base materials used to manufacture said tools.

In particular, one of the composite-material manufacturing methods most widely used in the sector is resin transfer molding (RTM), on account of the versatility thereof in obtaining composite-material structures with relatively complex geometries. In this method, a preform of reinforcing material, usually carbon fiber or glass fiber that has been given a specific structure (for example using a method known as hot forming), is placed inside a mold, and a polymer material, usually a thermostable resin, is then injected.

To prepare the preforms, for example in the case of preforms made of carbon fibers provided in plate form, the preforms are subjected to a prior hot molding process to adapt the preforms to the intended final shape when said preforms are inserted into the mold.

For this purpose, this sector uses metal structures, usually made of steel alloys, that are heated using resistors distributed over one surface of said structure so that the heat spreads towards the inside of the structure, generating a gradient that transfers thermal energy to the preform positioned in the structure. On account of the high thermal inertia of the steel alloys used, it is very difficult to control and maintain the correct temperature throughout the cycle. Furthermore, there are very high thermal-energy losses through contact between the metal structure and the external environment, which significantly increases the energy cost of said cycle, thereby reducing the efficiency of the process.

Furthermore, once the desired preform has been obtained and inserted into the mold in order to carry out the RTM process, the same issues related to the metal structures and tools used during application of the thermodynamic cycle are still present. In other words, when applying heat to the mold into which the resin has been injected for subsequent curing, for example using electrical resistors, most of this heat is lost through the mold border in contact with the external atmosphere. On account of this, control of the desired temperature is much less precise than would be desirable. furthermore, the efficiency of the process is significantly reduced, resulting in high energy costs and the specific issues related thereto, which can include greater environmental impact, inter alia.

### DESCRIPTION OF THE INVENTION

The present invention proposes a solution to the aforementioned issues by means of a modular cover for a molding tool as claimed in claim 1, a system for manufacturing a structural element according to claim 5, and a method for manufacturing a structural element according to claim 12. The dependent claims define preferred embodiments of the invention.

The term "thermodynamic cycle" is used throughout this document. This term means the application of heat and pressure to the element in question. This thermodynamic cycle is implemented using "heating means" to apply the corresponding "thermal cycle", and "pressure means" to apply the pressure required for the desired thermodynamic cycle.

A first aspect of the invention provides a modular cover for a molding tool, said cover comprising:
- a plurality of plates designed to be coupled together to cover at least a portion of the surface of the molding tool,
- fastening means designed to fasten the plurality of plates to the molding tool, in which each of the plurality of plates has at least one coating of reflective material.

Advantageously, the modular cover according to the invention prevents the leakage of most of the thermal energy generated in the typical processes involved in the production of composite material that includes reinforcing material, such as carbon fiber, soaked in a polymer material, such as a thermostable resin.

In particular, the cover prevents most of the thermal energy generated for the processes to shape the preform made of reinforcing material and to cure the composite material from being lost in the form of heat through the mold border in contact with the external atmosphere. More specifically, the cover facilitates control of the thermal process, as described below.

In techniques such as RTM, in a step prior to injection of polymer material and subsequent curing, the reinforcing material needs to be given a specific structure, referred to as the preform.

Conventionally, the reinforcing material is provided in the form of plates and has to undergo a thermal process to be molded into said preform. Temperatures in the order of 65°C are typically used for carbon fiber. This thermal process involves positioning the reinforcing material in a metal mold that provides the final shape and that transfers the thermal gradient required for shaping.

As described above, most of the thermal energy transmitted to the metal mold to keep the reinforcing material at the required temperature leaks through the surface of the mold in contact with the external atmosphere.

Furthermore, once the preform has been obtained, said preform is inserted into another metal mold into which the polymer material, such as thermostable resin, will be injected, and that will provide the final shape to the composite-material structure, as well as the thermal gradient required to cure said polymer material. As in the step of shaping the preform made of reinforcing material, this process involves large energy losses in the form of heat through the mold border in contact with the external atmosphere.

The modular cover according to the first aspect of the invention acts as a shield in said interface or border of the molding tool with the external atmosphere.

The coating of reflective material included on the plates that make up the cover prevent the thermal energy from leaking by radiation and/or convection, and encourages the thermal energy to be concentrated in the molding tool.

Furthermore, there are multiple additional advantageous effects. On one hand, by eliminating practically all of the energy losses, the total amount of energy required to carry out the shaping or curing processes is reduced, which helps to make the process more efficient.

As a result of requiring less energy to implement the thermal cycle, the thickness of the molds used can be reduced, as can the thickness of the elements used to apply pressure to the resin, for example a press. Consequently, the total weight and cost of the systems used is reduced considerably.

Furthermore, implementation of the invention in the RTM process described results in a lower environmental impact achieved directly by said significant reduction in energy used to keep the temperature applied to the material within the required ranges.

Similarly, controlling the energy supplied, adjusting the temperature of the material, and maintaining temperature are made more efficient by concentrating the thermal energy inside the molding tool, minimizing the effects of thermal inertia on temperature regulation caused by the significant losses.

This makes the design of the heating means used to generate the thermal energy required and the operation thereof simpler and more efficient. For example, installing electrical resistors that transmit pulses to regulate temperature. The number of pulses and the intensity thereof is reduced when precise temperature control is required.

Also advantageously, the modular structure comprising different plates makes the cover very versatile and adaptable to the different geometries onto which the cover is incorporated. Furthermore, said modular structure makes it possible to select the specific zones that are to benefit from thermal insulation in cases when the tool on which the cover is used does not need to be completely covered, which results in greater versatility and variety of thermal processes.

In a specific embodiment, the fastening means include at least one screw.

In a specific embodiment, the fastening means include at least one latch.

In a specific embodiment, each of the plurality of plates has at least one metal or polymer sheet.

Advantageously, the option of forming different types of plate as a function of the sheets used to make said plates, the materials thereof and the thickness thereof makes it possible to choose how and how much thermal energy is emitted to the external atmosphere from the molding tool. Furthermore, the presence of sheets of metal or polymer material in the outermost layer of the plates that make up the modular cover facilitate the handling thereof and protect the coating of reflective material.

In particular, in a preferred arrangement, the plate has at least one thin metal sheet (<3 mm) and at least one coating of reflective material, preferably having a thickness of approximately 0.5 mm. This embodiment provides optimum performance against energy losses, and this thickness of reflective material reduces losses by up to 97%. Moreover, the presence of at least one metal plate enables this arrangement to provide optimum behavior against the thermal cycles induced in the zones in contact with the heating means, for example electrical resistors, preventing degradation of the materials involved. Furthermore, said at least one metal plate provides rigidity and impact strength.

Advantageously, as a result of the use of the aforementioned thickness ranges, the relative weight increase of a tool resulting from incorporation of a modular cover according to this embodiment is normally less than 1%.

In an embodiment incorporating polymer sheets instead of metal sheets, the relative weight increase of a tool incorporating a modular cover system with the thicknesses of this embodiment is even less: less than 0.5%.

According to a second aspect of the invention, a system is provided for manufacturing a structural element that includes:
- a molding tool that includes:
   - a mold designed to receive an initial material, and
   - heating means for applying a thermal cycle to the initial material inside the mold, and
- a modular cover according to any of the embodiments of the first aspect of the invention.

In a specific embodiment, the system also includes:
- injection means for injecting polymer material into the mold, and
- pressure means for applying pressure to the polymer material inside the mold.

In a specific embodiment, the pressure means include a press.

In a specific embodiment, the modular cover includes a plate designed to cover the pressure means. This advantageously prevents the thermal energy generated for application of the thermal process from leaking into the external atmosphere through the surface of the pressure means in contact with said external atmosphere.

In a specific embodiment, the plurality of plates is in contact along the length of the surface thereof with the surface of the mold.

In a specific embodiment, the heating means for applying a thermal cycle to the polymer material include a plurality of resistors. Said resistors are preferably positioned on the sides of the mold. Advantageously, the modular cover can cover said heating means, thereby helping to concentrate all of the thermal energy generated thereby inside the space delimited by the cover, thereby avoiding the loss thereof. The cover also protects said heating means from damage caused by interactions with elements inside or outside the system.

According to a third aspect of the invention, a method is provided for manufacturing a structural element that includes the following steps:
a) providing a system according to any of the embodiments of the second aspect of the invention, and an initial material,
b) placing the initial material inside the mold,
c) covering at least a portion of the outer surface of the mold with the modular cover, and
d) applying a thermal cycle to the material inside the mold.

In a specific embodiment, the initial material is a reinforcing material and the structural element is a preform made of reinforcing material. Said initial material can be carbon fiber. Advantageously, in a hot shaping process for obtaining a carbon-fiber preform such as the one described above, the loss of thermal energy in the form of heat is prevented by implementing a step in which the system is covered with a modular cover according to any of the specific embodiments of the first aspect of the invention.

In a specific embodiment, the initial material is a preform made of reinforcing material, the structural element is an element made of composite material, the method also includes injecting polymer material into the mold, and the thermal cycle is applied to the preform made of reinforcing material and to the polymer material contained in the mold. Advantageously, in a process for curing composite material to obtain a structural element by RTM such as the one described above, the loss of thermal energy in the form of heat is prevented by implementing a step in which the system is covered with a modular cover according to any of the specific embodiments of the first aspect of the invention.

In a specific embodiment, the system includes pressure means and the method also includes applying pressure to the material contained in the mold, as well as covering at least a portion of the outer surface of the pressure means with the cover before applying the temperature/pressure thermodynamic cycle.

All of the features and/or steps of the methods described in this report (including the claims, description and drawings) can be combined in any combination, except combinations of said features that are mutually exclusive.

### DESCRIPTION OF THE FIGURES

These and other features and advantages of the invention are further clarified in the detailed description below of a preferred embodiment, given exclusively by way of illustrative and non-limiting example with reference to the attached figures.
- Figures 1a-c: These figures show a first embodiment of the cover according to the invention, in which the plurality of plates partially covers a molding tool.
- Figures 2a-c: These figures show a second embodiment of the cover according to the invention, in which the plurality of plates completely covers the lateral surface of an RTM mold.
- Figure 3: This figure shows a cross-section of the cover positioned away from the surface of the molding tool, and shows the operating mechanism thereof schematically.

### DETAILED DESCRIPTION OF THE INVENTION

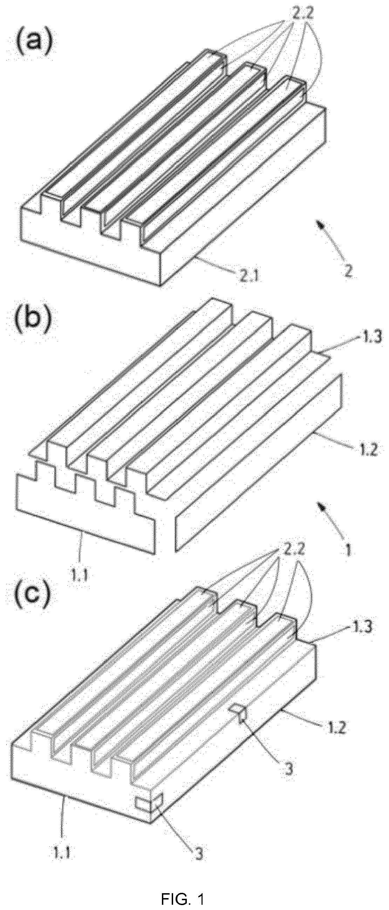

Figures 1a-c show a schematic example of use of an embodiment of the modular cover (1) according to the invention, in which said cover (1) is fastened to a mold (2.1) that is heated to shape preforms made of reinforcing material.

In particular, figure 1a shows a metal mold (2.1) used to shape preforms made of reinforcing material, for example carbon fiber, by applying heat to said reinforcing material.

In this embodiment, said mold (2.1) has a quadrangular prism structure. The upper base of the mold (2.1) has a grooved shape formed by bars (2.2) of square section that extend parallel to the longitudinal axis of the body of the mold (2.1). Thermoelectric resistors are arranged on the inner face of said bars (2.2) and transmit heat to said bars. The bars then transfer this heat to the reinforcing material to enable the reinforcing material to be molded until a preform with the final desired shape has been obtained.

The conductivity and thermal emissivity of the metal body of the mold (2.1) causes most of the generated heat to be transmitted to the external atmosphere outside the mold (2.1) through the surface thereof that is not in contact with the reinforcing material.

Figure 1b shows an example modular cover (1) in an uncoupled arrangement, i.e. in which the different plates (1.1, 1.2, 1.3) that formed the cover (1) are separated from one another and from the mold (2.1). Said cover (1) is designed geometrically to be coupled to the mold (2.1) shown in figure 1a. For this purpose, said modular cover (1) is made up of said plates (1.1, 1.2, 1.3), which in this case have three different geometries to enable each plate to fit and be coupled to a specific surface of the mold (2.1). Thus, the lateral plates (1.1, 1.2) are coupled structurally to the lateral surfaces of the mold (2.1), and the geometry of the top plate (1.3) is designed to couple structurally with the grooved shape formed by the bars (2.2) on the upper base of the body of the mold (2.1). The cover can include additional plates to cover the other lateral surfaces of the mold (2.1).

Figure 1c shows the example modular cover (1) shown in figure 1b coupled to the mold (2.1) in figure 1a. To do so, the plates (1.1, 1.2, 1.3) are connected together using latches (3) and fastened to the mold (2.1), completely covering the upper surface of the mold and partially covering the lateral surface of the mold.

The plates (1.1, 1.2, 1.3) that form the example embodiment of the modular cover (1) shown include a coating of reflective material (1.1.1) that prevents some of the heat generated for the thermal cycle required to shape the reinforcing material from leaking out of the mold via the surface of the mold (2.1).

Thus, essentially all of the thermal energy generated by the thermoelectric resistors on the inner surface of the bars (2.2) positioned on the upper base of the body of the mold (2.1) is concentrated on the inside of the cover (1).

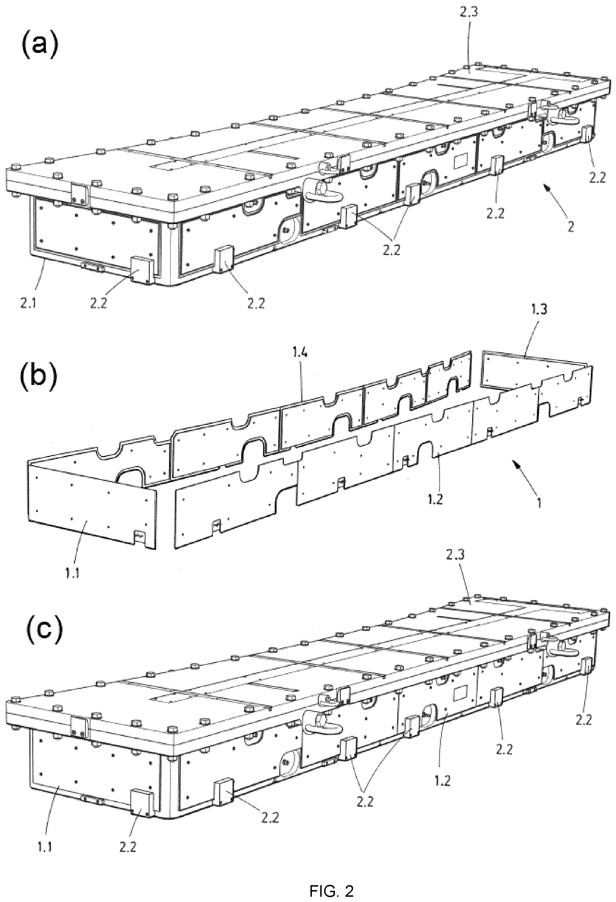

Figures 2a-b respectively show an example RTM molding tool (2) and a modular cover (1) comprising different plates (1.1, 1.2, 1.3, 1.4) designed to cover the lateral surface of said mold (2.1) once the plates (1.1, 1.2, 1.3) have been coupled to one another, setting the position thereof in relation to the mold in the RTM system. Figure 2c shows an example of operation illustrating a system for curing composite material using RTM that includes a molding tool (2) and a cover (1) such as those shown in figures 2a and 2b.

In particular, figure 2a schematically shows an example RTM molding tool (2) that includes a metal mold (2.1) designed to contain a preform of reinforcing material and to be injected internally with polymer material, such as a thermostable resin. Furthermore, pressure means (2.3) in the form of a press are shown on the upper surface of said molding tool (2). The molding tool (2) also includes heating means (2.2) in the form of thermoelectric resistors, that are adhered to and distributed over the external lateral surface of the mold (2.1).

Figure 2b shows an example modular cover (1) according to the invention comprising four plates (1.1, 1.2, 1.3, 1.4) of different geometries. Said plates (1.1, 1.2, 1.3, 1.4) are disconnected from one another and are not fastened to the molding tool (2). Said cover (1) is designed geometrically to be coupled to the lateral surface of the mold shown in figure 2a. For this purpose, the plates (1.1, 1.2, 1.3, 1.4) that make up said modular cover (1) in this case have four different geometries to enable the plates to fit and be coupled to the lateral surfaces of the mold (2.1). Furthermore, the plates (1.1, 1.2, 1.3, 1.4) have indentations to enable the thermoelectric resistors (2.2) to be engaged on the lateral surface of the mold (2.1)..

Figure 2c shows the example modular cover (1) shown in figure 2b coupled to the mold (2.1) of the RTM molding tool (2) shown in figure 2a. The plates (1.1, 1.2, 1.3, 1.4) cover the entire lateral surface of the mold (2.1).

The cover (1) may include a fifth plate to cover the press (2.3) of the molding tool (2), thereby additionally reducing the leakage of thermal energy to the outside of the mold (2.1).

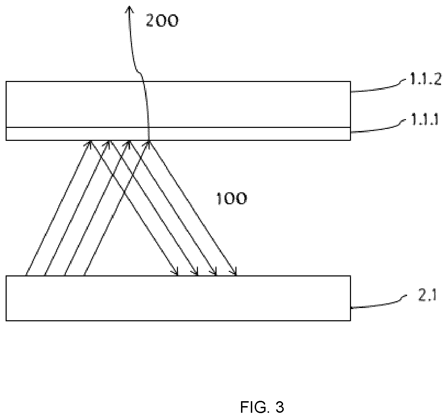

Figure 3 is a schematic illustration of the operating mechanism of the present invention. Flow lines (100) show the portion of the thermal energy generated for the thermal curing or molding process that leaks out of the mold from the surface of a portion of a section of mold (2.1) in contact with the external atmosphere, said energy not being used and representing an energy loss and a reduction in the efficiency of the process.

Said flow lines (100) are reflected back towards the mold (2.1) following contact with the coating of reflective material (1.1.1) in the illustrated section of one of the plurality of plates (1.1) that make up the modular cover (1) according to the invention.

In this embodiment, the plate (1.1) of the cover (1) includes a sheet (1.1.2) of polymer or metal material adhered to the coating of reflective material (1.1.1). The figure uses the flow line (200) to schematically show the residual thermal energy of the thermal process that is lost through said sheet (1.1.2) and transmitted to the external atmosphere outside the mold.

## Claims

1. A modular cover (1) for a molding tool (2), said cover (1) comprising:
a plurality of plates (1.1, 1.2, 1.3) designed to be coupled together to cover at least a portion of the surface of the molding tool (2),
fastening means (3) designed to fasten the plurality of plates to the molding tool (2),
in which
each of the plurality of plates (1.1, 1.2, 1.3) has at least one coating of reflective material (1.1.1).

2. The modular cover (1) as claimed in claim 1, in which the fastening means (3) include at least one screw.

3. The modular cover (1) as claimed in any of the preceding claims, in which the fastening means (3) include at least one latch.

4. The modular cover (1) as claimed in any of the preceding claims, in which each of the plurality of plates (1.1, 1.2, 1.3) has at least one metal or polymer sheet (1.1.2).

5. A system for manufacturing a structural element that includes:
- a molding tool (2) that includes:
• a mold (2.1) designed to receive an initial material,
• heating means (2.2) for applying a thermal cycle to the initial material inside the mold (2.1), and
- a modular cover (1) as claimed in any of the preceding claims.

6. The system as claimed in claim 5, additionally including:
• injection means for injecting polymer material into the mold (2.1), and
• pressure means (2.3) for applying pressure to the polymer material inside the mold (2.1).

7. The system as claimed in claim 6, in which the pressure means (2.3) include a press.

8. The system as claimed in claim 7, in which at least one plate of the plurality of plates (1.1, 1.2, 1.3) is in contact along the surface thereof with the surface of the press (2.3).

9. The system as claimed in any one of claims 5 to 8, in which the heating means (2.2) include a plurality of electrical resistors.

10. The system as claimed in any one of claims 5 to 9, in which at least one plate of the plurality of plates (1.1, 1.2, 1.3) is in contact along the surface thereof with the surface of the mold (2.1).

11. The system (4) as claimed in any one of claims 5 to 10, in which the plurality of plates (1.1, 1.2, 1.3) completely covers the surface of the mold (2.1).

12. A method for manufacturing a structural element that includes the following steps:
a) providing a system (4) as claimed in any of claims 5 to 11, and an initial material,
b) placing the initial material inside the mold (2.1),
c) covering at least a portion of the outer surface of the mold (2.1) with the modular cover (1), and
d) applying a thermal cycle to the material inside the mold (2.1).

13. The manufacturing method as claimed in claim 12, in which the initial material is a reinforcing material and the structural element is a preform made of reinforcing material.

14. The manufacturing method as claimed in claim 12, in which:
the initial material is a preform made of reinforcing material,
the structural element is an element made of composite material,
the method also includes injecting polymer material into the mold (2.1), and
the thermal cycle is applied to the preform made of reinforcing material and to the polymer material contained in the mold (2.1).

15. The manufacturing method as claimed in claim 14, in which:
the system includes pressure means (2.3), and
the method also includes:
applying pressure to the material inside the mold (2.1), and
covering at least a portion of the outer surface of the pressure means (2.3) with the modular cover (1) before applying the thermal cycle and applying pressure.
